# EUROPÄISCHE PATENTSCHRIFT

(11) **EP 2 583 838 B1**
(45) Veröffentlichungstag und Bekanntmachung des Hinweises auf die Patenterteilung: **16.01.2019**
(21) Anmeldenummer: 12183803.1
(22) Anmeldetag: 11.09.2012
(51) Int. Cl.: B60C 9/22, B60C 9/20, B60C 3/04, B60C 15/06

(54) **Luftreifen für ein Motorrad, insbesondere für ein Youngtimer-Motorrad**
Pneumatic tire for motorcycle, in particular for a youngtimer motorcycle
Pneu pour moto, en particulier pour une moto de type young-timer

(30) Priorität: 20.10.2011 DE 102011054636
(43) Veröffentlichungstag der Anmeldung: 24.04.2013
(73) Patentinhaber: Continental Reifen Deutschland GmbH, 30165 Hannover (DE)
(72) Erfinder: Zöller, Thomas, 34497 Korbach (DE)
(74) Vertreter: Finger, Karsten

(56) Entgegenhaltungen:
- EP-A1- 0 635 383
- EP-A1- 1 284 318
- EP-A1- 2 218 588
- EP-A2- 0 219 311
- Alfonse Palaima: "Night Dragon Tire Tour of North Amerika", motorcycle.com , 11. November 2008 (2008-11-11), XP002689045, Gefunden im Internet: URL:http://www.motorcycle.com/products/nig ht-dragon-tire-tour-of-north-america-87566 .html [gefunden am 2012-12-10]
- Pirelli: "Night Dragon - Produktdatenblatt", pirelli.com , XP002689046, Gefunden im Internet: URL:http://www.pirelli.com/tyre/de/de/moto rcycle/sheet/night_dragon.html?url=%3Fsubt ype%3Dcustom%26use%3D1 [gefunden am 2012-12-10]
- Pirelli: "Radiale Bauweise", pirelli.com , XP002689047, Gefunden im Internet: URL:http://www.pirelli.com/tyre/de/de/moto rcycle/genericPage/all_about_tyres.html [gefunden am 2012-12-10]

## Beschreibung

Die Erfindung betrifft einen Luftreifen für ein Motorrad, insbesondere für ein Youngtimer-Motorrad, dessen Höhen-Breiten-Verhältnis 90% bis 100% beträgt, dessen maximale Nenn-Querschnittsbreite 130 mm beträgt und wobei der Reifen zumindest eine einlagige Karkasse, Wulstbereiche mit Wulstkernen, Seitenwände, zumindest eine Gürtellage und einen Laufstreifen aufweist, welcher einen bei Geradeausfahrt mit dem Untergrund in Kontakt tretenden Kronenbereich und zwei Schulterbereiche aufweist, wobei die Gürtellage eine 0°-Gürtellage ist und wobei die Karkasse eine Radialkarkasse ist, deren Festigkeitsträger einen Winkel zwischen 60° und 90°, vorzugsweise zwischen 70° und 90° mit der Reifenumfangsrichtung einschließen.

Ein derartiger Luftreifen ist aus der EP 2 218 588 A1 bekannt.

Die EP 0 219 311 A2 offenbart einen Motorradreifen mit einer zweilagigen Karkasse und einem zweilagigen Gürtel sowie mit einem Paar Verstärkungslagen in den Reifenseitenwänden, welche radial außerhalb der Karkasse angeordnet sind und welche über den Reifenquerschnitt, insbesondere unterhalb des Gürtels unterbrochen angeordnet sind.
Aus Pirelli:"Night Dragon - Produktdatenblatt", pirelli.com, gefunden am 2012-12-10 im Internet: URL:http://www.pirelli.com/tyre/de/de/motocycle/genericPage/all_about_tyres.html sind Motorradreifen mit Radialkarkasse und einer einzigen Stahlgürtellage für V-Twin-Motorräder der neuesten Generation bekannt, welche als 16"-Reifen die Dimension 130/90 B 16 M/C 65H TL aufweisen.
Aus Alfonse Palaima: "Night Dragon Tire Tour of North Amerika", motorcycle.com, 11. November 2008 (2008-11-11), gefunden am 2012-12-10 im Internet: URL:http://www.motorcycle.com/products/night-dragon-tire-tour-of-north-america-87566.html ist ein Motorradreifen mit einer Radialkarkasse und einer 0°-Gürtellage bekannt.

Die EP 1 284 318 A1 offenbart Motorradreifen mit einer Radialkarkasse und zumindest einer Gürtellage mit einem Steigungswinkel von mindestens 20° in Bezug auf die Umfangsrichtung.

Motorräder mit Baujahr 1980 und früher waren mit sogenannten Diagonalreifen bestückt. Die Diagonalreifen für Motorräder zeichnen sich dadurch aus, dass diese zumeist eine 2-lagige Karkasse aufweisen, deren Festigkeitsträger einen Winkel von etwa 45° mit der Reifenumfangsrichtung einschließen, wobei die Festigkeitsträger der einen Karkasslage kreuzend zu den Festigkeitsträgern der anderen Karkasslage angeordnet sind. Zudem weisen die Diagonalreifen zumeist einen 1- bis 2-lagigen Gürtel auf, wobei die Festigkeitsträger der Gürtellagen etwa einen Winkel von 40° zur Reifenumfangsrichtung einnehmen. Die Diagonalreifen sind mit einer maximalen Reifen-Breite von 130 mm vergleichsweise schmal und haben eine Querschnittshöhe von 90% bis 100%.

Die Diagonalreifen weisen im Vergleich zu modernen Motorradreifen nachteilige Fahreigenschaften in Bezug auf beispielsweise Fahrstabilität, Zielgenauigkeit, Dämpfungseigenschaften und Fahrkomfort auf.

Moderne Motorradreifen hingegen sind breit und weisen eine 1- oder 2-lagige Radialkarkasse auf, wobei "radial" hier meint, dass die Festigkeitsträger einen Winkel von 60° bis 90° mit der Reifen-Umfangsrichtung einschließen. Zudem weisen die modernen Motorradreifen einen 1-lagigen 0°-Gürtel auf. "0°-Gürtel" meint, dass ein gummierter Festigkeitsträger in etwa in 0°-Richtung, also etwa in Umfangsrichtung des Reifens spiralig aufgespult ist und den Gürtel bildet. Diese Technik ermöglicht eine sehr runde Reifenkontur, wie sie für die Kurvenfahrt unter Schräglage an einspurigen modernen Motorrädern erwünscht ist. Die Reifen-Breiten betragen zwischen 110 mm bis 300 mm, die Querschnittshöhen betragen zwischen 40% bis 80%.

In schmaleren Motorradreifendimensionen mit großen Querschnittshöhen gibt es bislang keine Radialreifen mit 0°-Gürtel, da die Fachwelt bislang u.a. der Meinung war, dass die Seitenwände eine nicht ausreichende Steifigkeit aufweisen würden. Zudem war die Fachwelt der Ansicht, dass der Reifen wenigstens 110 mm breit sein müsse.

Der Erfindung liegt die Aufgabe zugrunde, einen Motorradreifen, insbesondere für ein Youngtimer-Motorrad, dessen Reifen-Querschnittshöhe 90% bis 100% beträgt, dessen maximale Reifen-Breite 130 mm beträgt und der verbesserte Fahreigenschaften in Bezug auf beispielsweise Fahrstabilität, Zielgenauigkeit, Dämpfungseigenschaften und Fahrkomfort aufweist.

Die Aufgabe wird gelöst, indem ein Breaker zwischen der Karkasse und der 0°-Gürtellage unterhalb der 0°-Gürtellage angeordnet ist, welcher eine axiale Breite aufweist, welche in etwa gleich breit oder breiter als die 0°-Gürtellage ist.

Der erfindungsgemäße Motorradreifen ist in Bezug auf seine Breite und in Bezug auf seine Querschnittshöhe ein "alter" Motorradreifen und ist insbesondere für Youngtimer-Motorräder geeignet, der jedoch aufgrund seiner Radialkarkasse und aufgrund des gespulten 0°-Gürtels wesentlich verbesserte Fahreigenschaften aufweist, die vergleichbar mit modernen Motorradreifen sind. Insbesondere sind die Fahreigenschaften Fahrstabilität, Zielgenauigkeit, Dämpfungseigenschaften und Fahrkomfort wesentlich verbessert. Vorteilhaft ist es zudem, dass ein Breaker zwischen der Radialkarkasse und der 0°-Gürtellage den Laufflächenbereich verstärkt, welcher eine axiale Breite aufweist, welche in etwa gleich breit oder breiter als die 0°-Gürtellage ist.

Entgegen der Meinung der Fachwelt ist es bei diesem schmalen Radialreifen mit hoher Seitenwand gelungen, einen 0°-Gürtel einzusetzen und dabei die o.g. Fahreigenschaften zu verbessern und das, obwohl der Reifen eine Reifen-Querschnittshöhe von 90% bis 100% und eine maximale Reifen-Breite von 130 mm aufweist. Bisher war die Meinung der Fachwelt, dass dieses aufgrund der nicht so steifen Seitenwände und aufgrund der geringen Breite des Reifens und der Felgen nicht ginge.

Vorteilhaft ist es, wenn die Karkasse zumindest im Bereich des Laufstreifens 2-lagig ausgeführt ist.

Zweckmäßig ist es, wenn der vorgenannte Breaker Festigkeitsträger aufweist, welche in etwa in dem gleichen Winkel wie die Karkassfestigkeitsträger in Bezug auf die Umfangsrichtung orientiert sind, jedoch zu den letztgenannten kreuzend angeordnet sind um die Schräglaufsteife des Reifens zu erhöhen.

Vorteilhaft ist es, wenn zusätzlich ein Flipper angeordnet ist, dessen Festigkeitsträger mit der Karkasslage eine gekreuzte Struktur bilden um die Seitenwand zu verstärken. In einer anderen Ausführungsform ist eine zweite Karkasslage angeordnet, deren Festigkeitsträger einen Winkel von mindestens 60° oder mehr mit der Reifenumfangsrichtung einschließen.

Vorteilhaft für den Einsatz des Luftreifens als Vorderrad ist es, wenn die 2-lagige Karkasse derart ausgeführt ist, dass die Festigkeitsträger der einen Karkasslage kreuzend zu den Festigkeitsträgern der anderen Karkasslage angeordnet sind. Es ist eine gekreuzte Struktur hergestellt. Speziell am Vorderrad ist zumindest im Laufflächenbereich eine gekreuzte zweilagige Struktur vorteilhaft, um ein geeignetes Maß an Schräglaufsteife sicher zu stellen.

Zweckmäßig für den Einsatz des Luftreifens als Hinterrad ist es, wenn die zweilagige Karkasse derart ausgeführt ist, dass die Festigkeitsträger der einen Karkasslage parallel zu den Festigkeitsträgern der anderen Karkasslage angeordnet sind. Hierdurch ist der Luftreifen vorteilhaft für den Einsatz als Hinterrad in Bezug auf die Schräglaufsteife weicher ausgeführt.

Die Erfindung wird nun anhand einer Zeichnung, die ein schematisches Ausführungsbeispiel der Erfindung darstellt, näher beschrieben.

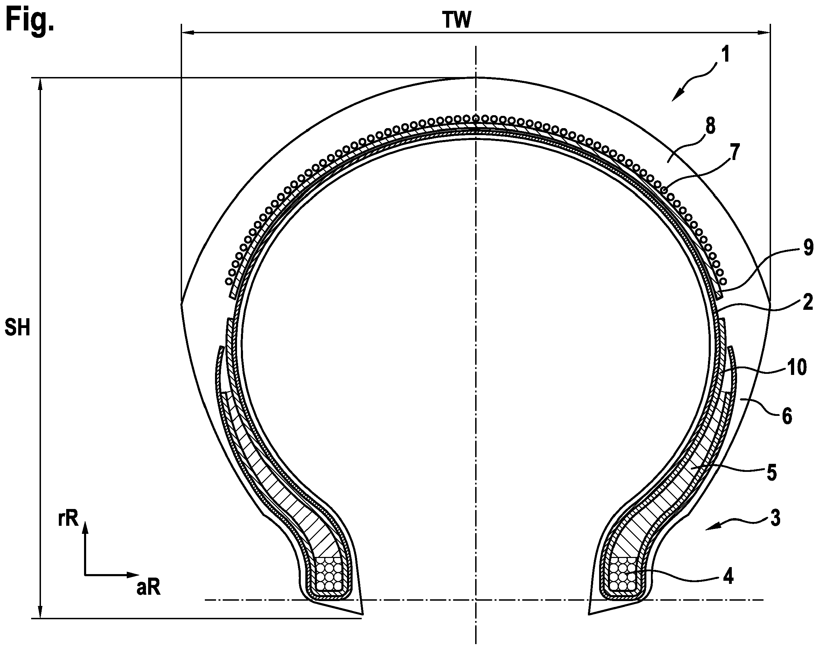

Dabei zeigt die einzige Figur einen Querschnitt durch einen erfindungsgemäßen Motorradreifen 1. Der Motorradreifen weist eine Querschnittshöhe SH von 90% und eine Breite TW von 100 mm auf, so wie es bei Motorradreifen für Youngtimer-Motorräder üblich ist.

Der Motorradreifen 1 weist eine einlagige Karkasse 2, Wulstbereiche 3 mit Wulstkernen 4 und Kernreitern 5, Seitenwände 6, eine Gürtellage 7 und einen Laufstreifen auf, welcher aus einem bei Geradeausfahrt mit dem Untergrund in Kontakt tretenden Kronenbereich und aus zwei Schulterbereichen besteht. Die Gürtellage 7 ist eine 0°-Gürtellage und die Karkasse 2 eine Radialkarkasse, deren Festigkeitsträger einen Winkel zwischen 60° und 90°, hier 75° mit der Reifenumfangsrichtung einschließen. Die 0°-Gürtellage besteht aus einem gummierten Festigkeitsträger, welcher in etwa in 0°-Richtung, also etwa in Umfangsrichtung des Reifens, spiralig aufgespult ist. Der gummierte Festigkeitsträger ist ein 3x4x0.20 HE Stahlcord. Ein Breaker 9 ist zwischen der Karkasse 2 und der 0°-Gürtellage 7 angeordnet. Die axiale Breite des Breakers 9 ist größer als die der 0°-Gürtellage 7. Der Breaker 9 weist Festigkeitsträger auf, welche in etwa in dem gleichen Winkel wie die Karkassfestigkeitsträger in Bezug auf die Umfangsrichtung orientiert sind, jedoch zu den letztgenannten kreuzend angeordnet sind. Im Wulstbereich 3 ist ein Flipper 10 angeordnet, dessen Festigkeitsträger ebenfalls in etwa in dem gleichen Winkel wie die Karkassfestigkeitsträger in Bezug auf die Umfangsrichtung orientiert sind, jedoch zu den letztgenannten kreuzend angeordnet sind.

### Bezugszeichenliste

- 1: Motorradreifen
- 2: Karkasse
- 3: Wulstbereich
- 4: Wulstkern
- 5: Kernreiter
- 6: Seitenwand
- 7: Gürtellage
- 8: Laufstreifen
- 9: Breaker
- 10: Flipper

- SH: Reifenquerschnittshöhe
- TW: Reifenquerschnittsbreite

## Patentansprüche

1. Luftreifen (1) für ein Motorrad, insbesondere für ein Youngtimer-Motorrad, dessen Höhen-Breiten-Verhältnis(Ra) 90% bis 100% beträgt, dessen maximale Nenn-Querschnittsbreite (TW) 130 mm beträgt und wobei der Reifen (1) zumindest eine einlagige Karkasse (2), Wulstbereiche (3) mit Wulstkernen (4), Seitenwände (6), zumindest eine Gürtellage (7) und einen Laufstreifen (8) aufweist, welcher einen bei Geradeausfahrt mit dem Untergrund in Kontakt tretenden Kronenbereich und zwei Schulterbereiche aufweist, wobei die Gürtellage (7) eine 0°-Gürtellage ist und wobei die Karkasse (2) eine Radialkarkasse ist, deren Festigkeitsträger einen Winkel zwischen 60° und 90°, vorzugsweise zwischen 70° und 90° mit der Reifenumfangsrichtung einschließen, **dadurch gekennzeichnet, dass** ein Breaker (9) zwischen der Karkasse (2) und der 0°-Gürtellage (7) unterhalb der 0°-Gürtellage (7) angeordnet ist, welcher eine axiale Breite aufweist, welche in etwa gleich breit oder breiter als die 0°-Gürtellage (7) ist.

2. Luftreifen (1) nach Anspruch 1, **dadurch gekennzeichnet, dass** die Karkasse zumindest im Bereich des Laufstreifens 2-lagig ausgeführt ist.

3. Luftreifen (1) nach Anspruch 2, **dadurch gekennzeichnet, dass** der Breaker (9) Festigkeitsträger aufweist, welche in etwa in dem gleichen Winkel wie die Karkassfestigkeitsträger in Bezug auf die Umfangsrichtung orientiert sind, jedoch zu den letztgenannten kreuzend angeordnet sind.

4. Luftreifen (1) nach einem der Ansprüche 1 bis 3, **dadurch gekennzeichnet, dass** eine zweite Karkasslage (2) angeordnet ist, welche den gesamten Reifenquerschnitt durchläuft.

5. Luftreifen (1) nach einem der Ansprüche 1 bis 4, **dadurch gekennzeichnet, dass** ein Flipper (10) angeordnet ist, dessen Festigkeitsträger die Karkasslage (2) in etwa mit dem gleichen Winkel kreuzt.

6. Luftreifen (1) nach einem oder mehreren der Ansprüche 1-5, **dadurch gekennzeichnet, dass** eine 2-lagige Karkasse (2) angeordnet ist, deren Festigkeitsträger einen Winkel von mindestens 60° oder mehr mit der Reifenumfangsrichtung einschließen.

7. Luftreifen (1) für ein Motorradvorderrad nach einem oder mehreren der vorangehenden Ansprüche 2 - 6, **dadurch gekennzeichnet, dass** die 2-lagige Karkasse (2) derart ausgeführt ist, dass die Festigkeitsträger der einen Karkasslage (2) kreuzend zu den Festigkeitsträgern der anderen Karkasslage (2) angeordnet sind.

8. Luftreifen für ein Motorradhinterrad nach einem oder mehreren der vorangehenden Ansprüche 2 - 6, **dadurch gekennzeichnet, dass** die 2-lagige Karkasse (2) derart ausgeführt ist, dass die Festigkeitsträger der einen Karkasslage (2) parallel zu den Festigkeitsträgern der anderen Karkasslage (2) angeordnet sind.

## Claims

1. Pneumatic tyre (1) for a motorcycle, in particular for a youngtimer motorcycle, the height-width ratio (Ra) of which is 90% to 100%, the maximum nominal cross-sectional width (TW) of which is 130 mm and the tyre (1) comprising at least a single-ply carcass (2), bead regions (3) with bead cores (4), sidewalls (6), at least one belt ply (7) and a tread (8), which has a crown region that comes into contact with the ground when travelling straight and two shoulder regions, the belt ply (7) being a 0° belt ply and the carcass (2) being a radial-ply carcass, the reinforcing elements of which form an angle of between 60° and 90°, preferably between 70° and 90°, with the circumferential direction of the tyre, **characterized in that** a breaker (9), which has an axial width that is approximately as wide or wider than the 0° belt ply (7), is arranged between the carcass (2) and the 0° belt ply (7) underneath the 0° belt ply (7).

2. Pneumatic tyre (1) according to Claim 1, **characterized in that** the carcass is of a two-ply configuration, at least in the region of the tread.

3. Pneumatic tyre (1) according to Claim 2, **characterized in that** the breaker (9) comprises reinforcing elements which are oriented approximately at the same angle with respect to the circumferential direction as the carcass reinforcing elements, but are arranged crossing the latter.

4. Pneumatic tyre (1) according to one of Claims 1 to 3, **characterized in that** a second carcass ply (2) is arranged, which runs through the entire cross section of the tyre.

5. Pneumatic tyre (1) according to one of Claims 1 to 4, **characterized in that** a flipper (10) is arranged, the reinforcing element of which crosses the carcass ply (2) approximately at the same angle.

6. Pneumatic tyre (1) according to one or more of Claims 1-5, **characterized in that** a 2-ply carcass (2) is arranged, the reinforcing elements of which form an angle of at least 60° or more with the circumferential direction of the tyre.

7. Pneumatic tyre (1) for a motorcycle front wheel according to one or more of the preceding Claims 2-6, **characterized in that** the 2-ply carcass (2) is configured in such a way that the reinforcing elements of the one carcass ply (2) are arranged crossing the reinforcing elements of the other carcass ply (2).

8. Pneumatic tyre for a motorcycle rear wheel according to one or more of the preceding Claims 2-6, **characterized in that** the 2-ply carcass (2) is configured in such a way that the reinforcing elements of the one carcass ply (2) are arranged parallel to the reinforcing elements of the other carcass ply (2).

## Revendications

1. Bandage pneumatique (1) pour roue de moto, en particulier pour roue de moto dite "youngtimer", dont le rapport (Rₐ) entre la hauteur et la largeur est compris entre 90 % et 100 %, dont la largeur nominale maximale (TW) de la section transversale est de 130 mm, le bandage de roue (1) présentant
au moins une carcasse (2) en une couche,
des parties de bourrelet (3) dotée d'une âme (4) de bourrelet, de parois latérales (6),
au moins une couche de ceinture (7) et
une bande de roulement (8) qui présente une partie de couronne qui entre en contact avec le sol lors d'un parcours en ligne droite et deux parties d'épaulement,
la couche de ceinture (7) étant une couche de ceinture à 0° et la carcasse (2) étant une carcasse radiale dont les renforts forment avec la direction périphérique du bandage de roue un angle compris entre 60° et 90° et de préférence entre 70° et 90°, **caractérisé en ce que**
un arrêt (9) dont la largeur axiale est sensiblement égale ou supérieure à celle de la couche de ceinture (7) à 0° est disposé entre la carcasse (2) et la couche de ceinture (7) à 0°, en dessous de la couche de ceinture (7) à 0°.

2. Bandage pneumatique (1) selon la revendication 1, **caractérisé en ce qu'**au moins au niveau de la bande de roulement, la carcasse est réalisée en 2 couches.

3. Bandage pneumatique (1) selon la revendication 2, **caractérisé en ce que** l'arrêt (9) présente des renforts orientés sensiblement par rapport à la direction périphérique suivant le même angle que les renforts de la carcasse, mais croisés par rapport à ces derniers.

4. Bandage pneumatique (1) selon l'une des revendications 1 à 3, **caractérisé en ce qu'**une deuxième couche de carcasse (2) qui s'étend sur toute la section transversale du bandage de roue est prévue.

5. Bandage pneumatique (1) selon l'une des revendications 1 à 4, **caractérisé en ce qu'**une palme (10) dont les renforts croisent la couche de carcasse (2) sensiblement sous le même angle est prévue.

6. Bandage pneumatique (1) selon l'une ou plusieurs des revendications 1 à 5, **caractérisé en ce qu'**il présente une carcasse (2) en 2 couches dont les renforts forment avec la direction périphérique du bandage de roue un angle d'au moins 60° ou davantage.

7. Bandage pneumatique (1) pour roue avant de moto, selon l'une ou plusieurs des revendications 2 à 6 qui précèdent, **caractérisé en ce que** la carcasse (2) en 2 couches est réalisée de telle sorte que les renforts d'une couche (2) de la carcasse croisent les renforts de l'autre couche (2) de la carcasse.

8. Bandage pneumatique pour roue arrière de moto selon l'une ou plusieurs des revendications 2 à 6 qui précèdent, **caractérisé en ce que** la carcasse (2) en 2 couches est réalisée de telle sorte que les renforts d'une couche (2) de la carcasse sont parallèles aux renforts de l'autre couche (2) de la carcasse.
